# EUROPÄISCHE PATENTSCHRIFT

(11) **EP 2 282 281 B1**
(45) Veröffentlichungstag und Bekanntmachung des Hinweises auf die Patenterteilung: **17.12.2014**
(21) Anmeldenummer: 10007745.2
(22) Anmeldetag: 26.07.2010
(51) Int. Cl.: G01D 4/00

(54) **Verfahren und Vorrichtungsanordnung zur Authentifizierung an einem Serviceportal eines Verbrauchsdienstleisters**
Method and device assembly for authentication purposes on a service portal of a consumer service provider
Procédé et agencement de dispositif pour l'authentification sur un portail de service d'un prestataire de service

(30) Priorität: 24.07.2009 DE 102009034632
(43) Veröffentlichungstag der Anmeldung: 09.02.2011
(73) Patentinhaber: METRONA WÄRMEMESSER UNION GMBH, 81379 München (DE)
(72) Erfinder: Fischer, Holger, 80799 München (DE); Schröder, Franz, 82054 Sauerlach (DE); Lieberum, Axel, 81247 München (DE); Papert, Olaf, 94526 Metten (DE)
(74) Vertreter: Prinz & Partner mbB

(56) Entgegenhaltungen:
- US-A- 4 720 860
- US-A1- 2004 059 585
- RSA SECURITY INC: "RSA SecurID Authenticators - The gold standard in two-factor user authentication", INTERNET CITATION, 2005, XP002415086, Gefunden im Internet: URL:http://www.sas-uk.net/pdfs/rsasecurity /sid_ds_0205.pdf [gefunden am 2007-01-16]
- ALEX BIRYUKOV ET AL: "Cryptanalysis of the Alleged SecurID Hash Function", 15. Mai 2004 (2004-05-15), SELECTED AREAS IN CRYPTOGRAPHY; [LECTURE NOTES IN COMPUTER SCIENCE;;LNCS], SPRINGER-VERLAG, BERLIN/HEIDELBERG, PAGE(S) 130 - 144, XP019004152, ISBN: 978-3-540-21370-3 * Section 1 Section 2 *

## Beschreibung

Die Erfindung betrifft ein Verfahren zur Authentifizierung an einem Serviceportal eines Verbrauchsdienstleisters, das einem Nutzer einer Abrechnungseinheit Verbrauchsinformationen zur Verfügung stellt. Die Erfindung betrifft ferner eine Vorrichtungsanordnung zur Durchführung eines solchen Verfahrens.

Mit der Umsetzung der EU-Richtlinie über Endenergieeffizienz und Energiedienstleistungen (EDL-RL) in nationales Recht sind die rechtlichen Rahmen bedingungen zur Einführung von "Smart Metering" Systemen gesetzt. In solchen Systemen kommen intelligente Zähler (auch Smart Meter genannt) zum Einsatz, mit denen die Zählerdaten elektronisch an den Anbieter (Energieversorger, etc.) übermittelt werden. Smart Metering betrifft nicht nur die Stromzählung, sondern allgemein Zusatzleistungen im Zusammenhang mit der Messung von Elektrizität, Gas, Wasser, Wärme, etc. Ein wesentlicher Aspekt von Smart Metering-Systemen ist es, den Verbrauch für den Nutzer unmittelbar und zeitnah sichtbar zu machen und es ihm auf diese Weise zu ermöglichen, direkt Einfluss auf sein Verbrauchsverhalten zu nehmen.

Aus datenschutzrechtlichen Gründen soll die Sichtbarmachung von Zählerdaten bzw. verarbeiteten oder ausgewerteten Verbrauchsdaten, im Folgenden allgemein als Verbrauchsinformationen bezeichnet, nur gegenüber einem berechtigten Nutzer der zugehörigen Wohn- bzw. Gewerbeeinheit erfolgen. Unter einer Wohn- bzw. Gewerbeeinheit ist eine Einheit zu verstehen, für die von einem Verbrauchsdienstleister eine zusammengefasste Erhebung und/oder Abrechnung des Verbrauchs vorgenommen wird; diese Einheiten werden im Folgenden allgemein als Abrechnungseinheiten bezeichnet. Datenschutzrechtliche Voraussetzung für diese Dienstleistung, die das aktuelle Verbrauchsverhalten für den Nutzer transparent macht, ist es somit, dass jederzeit sichergestellt ist, dass nur der aktuelle Nutzer einer Abrechnungseinheit für die Dauer seines vertraglichen Nutzungsverhältnisses - und nur für dieses Zeitintervall - Zugang zu den Verbrauchsinformationen seiner Abrechnungseinheit erhält.

In der Praxis stellt eine solche Sicherstellung einer Zugangsberechtigung zu Verbrauchsdaten bei gleichzeitiger Absicherung gegen jedweden unautorisierten Informationszugriff von dritter Seite allerdings einen erheblichen verwaltungstechnischen Aufwand dar. Die Gründe hierfür sind die Folgenden:
Allein der deutschlandweite Mietwohnungsbestand umfasst grob geschätzt etwa 20 Millionen Abrechnungseinheiten. In den Abrechnungseinheiten werden üblicherweise alle fünf bis zehn Jahre sämtliche Verbrauchsmessgeräte ausgetauscht, d. h. bereits die Rate des Gerätebestandswechsels beträgt 10 % jährlich. Hinzu kommen im statistischen Mittel mindestens etwa 20 bis 25 % jährliche Nutzerwechsel im Gesamtbestand der Abrechnungseinheiten, was sich aus bekannten Umzugsstatistiken ergibt. In Summe kann also in Deutschland jährlich von mindestens etwa 6 bis 7 Millionen Wechseln von Zugangsberechtigungen ausgegangen werden. Der hiermit verbundene Aufwand von zeitnaher Pflege der Nutzerdaten sowie Erteilung und Sperrung von Zugangsberechtigungen ist nur mit sehr hohem Personal- und Datenverarbeitungsaufwand zu bewältigen.

Aus der US 4 720 860 A ist für eine andere Anwendung ein Verfahren zur Authentifizierung mit folgenden Schritten bekannt:
- Bereitstellen einer persönlichen Identifikation;
- Erzeugen eines von der Zeit und der Geräteidentifikation abhängigen Nutzerkennworts mittels eines Algorithmus auf Seiten des Nutzers;
- Empfangen einer Anmeldeanfrage, die die persönliche Identifikation und das Nutzerkennwort enthält;
- Erzeugen eines von der Zeit und der Geräteidentifikation abhängigen Dienstleisterkennworts mittels des bekannten Algorithmus; und
- Vergleichen des Nutzerkennworts mit dem Dienstleisterkennwort.

Serviceportale von Verbrauchsdienstleistern, die es dem Nutzer einer Abrechnungseinheit erlauben, seine Verbrauchsdaten einzusehen, sind beispielsweise aus der US 2004/0058585 A1 bekannt.

Aufgabe der Erfindung ist es, den verwaltungstechnischen Aufwand im Zusammenhang mit Smart Metering Dienstleistungen möglichst gering zu halten.

Gelöst wird diese Aufgabe durch ein Verfahren mit den Merkmalen des Anspruchs 1 sowie durch ein Verfahren mit den Merkmalen des Anspruchs 2. Vorteilhafte und zweckmäßige Ausgestaltungen des erfindungsgemäßen Verfahrens sind in den zugehörigen Unteransprüchen angegeben.

Das erfindungsgemäße Verfahren zur Authentifizierung an einem Serviceportal eines Verbrauchsdienstleisters, das einem Nutzer einer Abrechnungseinheit Verbrauchsinformationen zur Verfügung stellt, umfasst folgende Schritte:
- Bereitstellen einer Geräteidentifikation, die einem in der Abrechnungseinheit installierten Verbrauchsmessgerät zugeordnet ist;
- Erzeugen eines von der Zeit und der Geräteidentifikation abhängigen Nutzerkennworts mittels eines dem Verbrauchsdienstleister bekannten Algorithmus auf Seiten des Nutzers, wobei Vorkehrungen getroffen sind, dass die Erzeugung des Nutzerkennworts auf Betreiben des Nutzers nur innerhalb der Abrechnungseinheit auslösbar ist;
- Empfangen einer Anmeldeanfrage auf Seiten des Verbrauchsdienstleisters, die die Geräteidentifikation und das Nutzerkennwort enthält;
- Erzeugen eines von der Zeit und der Geräteidentifikation abhängigen Dienstleisterkennworts mittels des bekannten Algorithmus auf Seiten des Verbrauchsdienstleisters; und
- Vergleichen des Nutzerkennworts mit dem Dienstleisterkennwort.

Gemäß einem ersten Aspekt des erfindungsgemäßen Verfahrens bestehen die Vorkehrungen, dass die Erzeugung des Nutzerkennworts auf Betreiben des Nutzers nur innerhalb der Abrechnungseinheit auslösbar ist, darin, dass das Nutzerkennwort in einer Recheneinheit des Verbrauchsmessgeräts erzeugt und auf einem Display des Verbrauchsmessgeräts angezeigt wird.

Gemäß einem zweiten Aspekt des erfindungsgemäßen Verfahrens bestehen die Vorkehrungen, dass die Erzeugung des Nutzerkennworts auf Betreiben des Nutzers nur innerhalb der Abrechnungseinheit auslösbar ist, darin, dass ein Handsteuergerät über eine proprietäre Schnittstelle mit dem Verbrauchsmessgerät verbunden wird und das Nutzerkennwort in einer Recheneinheit des Handsteuergeräts erzeugt und auf einem Display des Handsteuergeräts angezeigt wird.

Die Erfindung beruht auf der Erkenntnis, dass im Rahmen von Smart Metering Dienstleistungen ein erheblicher Teil des verwaltungstechnischen Aufwands bei der Organisation von Zugangsberechtigungen allein der Pflege von Nutzerdaten geschuldet ist. Die Erfindung vermeidet diesen Teilaufwand, indem auf Seiten des Verbrauchsdienstleisters anstelle einer personenbezogenen Zugangsberechtigungsverwaltung eine gerätebezogene Verwaltung eingesetzt wird.

Diese Maßnahme beruht auf der Überlegung, dass in der Regel nur Personen Zugang zu Verbrauchsmessgeräten haben, die zur Nutzung der betreffenden Abrechnungseinheit berechtigt sind und damit Anspruch auf die dieser Abrechnungseinheit zugeordneten Verbrauchsinformationen haben. Demnach ist es nach einer Kopplung mit der Zugangsberechtigung an ein geräteabhängiges Nutzerkennwort nicht notwendig, den Berechtigungsstatus der Person zu prüfen, die Einsicht in die Verbrauchsinformationen wünscht, weil das Nutzerkennwort für unberechtigte Personen nicht zugänglich ist.

Da das Nutzerkennwort darüber hinaus zeitgesteuert generiert wird, kann auf Seiten des Verbrauchsdienstleisters durch eine zeitliche Begrenzung der Gültigkeit des Nutzerkennworts sichergestellt werden, dass ein Nutzer keine Verbrauchsinformationen beziehen kann, die nicht in seinen Nutzungszeitraum fallen, beispielsweise nach einem Auszug aus der Abrechnungseinheit.

Aufgrund der so erreichten weitgehenden Anonymisierung der Authentifizierung ist der Verbrauchsdienstleister von der Pflege und dem Schutz persönlicher Nutzerdaten befreit. Eine Identifizierung der nach Verbrauchsinformationen anfragenden Personen durch Aufnahme von Daten, die telefonisch mit Hilfe von Callcentern oder über das Internet mittels aufwendiger Login-Verfahren mit persönlichen und vertraulich zu behandelnden Passwörtern erfolgen würde, ist nicht erforderlich, ebenso wenig wie eine Zuordnung der identifizierten Personen zu den von diesen genutzten Abrechnungseinheiten.

Die Aufgabe der Erfindung wird auch durch eine Vorrichtungsanordnung mit den Merkmalen des Anspruchs 8 gelöst.

Vorteilhafte und zweckmäßige Ausgestaltungen der erfindungsgemäßen Vorrichtungsanordnung sind in den zugehörigen Unteransprüchen angegeben.

Der Teil des dienstleisterseitigen Datenverarbeitungssystems, der Anmeldeanfragen empfängt und/oder der Teil, der das Nutzerkennwort mit dem Dienstleisterkennwort vergleicht, kann entweder durch Personen oder durch elektronische Datenverarbeitungsgeräte gebildet sein, während die Erzeugung des Dienstleisterkennworts in jedem Fall elektronisch erfolgt.

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur symbolisch zwei Ablaufschritte des erfindungsgemäßen Authentifizierungsverfahrens.

Die Erfindung wird nachfolgend am konkreten Beispiel eines Dienstleistungsunternehmens (Verbrauchsdienstleister) beschrieben, das primär Dienstleistungen im Zusammenhang mit der Erfassung und Abrechnung von Heizkosten in Wohn-und Gewerbeeinheiten (Abrechnungseinheiten) anbietet und darüber hinaus den Nutzern der Abrechnungseinheiten über ein Serviceportal aktuelle Verbrauchsinformationen zur Verfügung stellt.

Ein Nutzer 10 einer Abrechnungseinheit möchte Informationen über sein aktuelles Verbrauchsverhalten, im vorliegenden Fall seines Heizverhaltens, einsehen. Um Zugang zu diesen Informationen zu erhalten, ist eine Authentifizierung am Serviceportal des Verbrauchsdienstleisters notwendig.

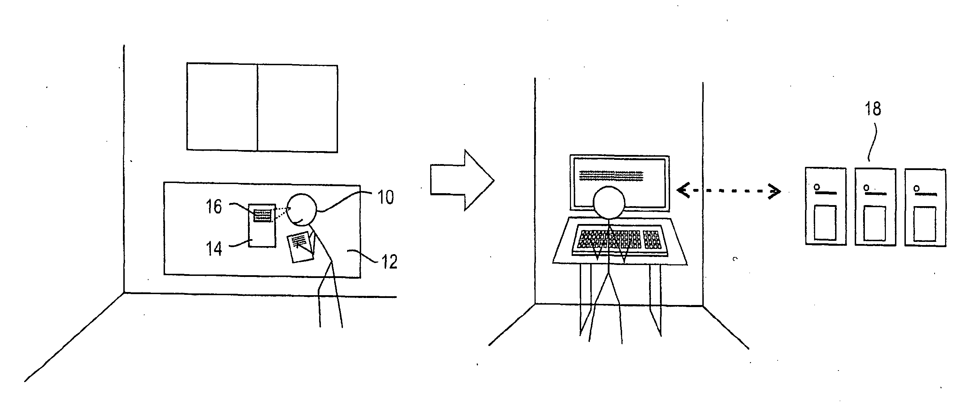

An den Heizkörpern 12 der Abrechnungseinheit sind Verbrauchsmessgeräte 14, im vorliegenden Fall elektronische Heizkostenverteiler, installiert, von denen wenigstens einer über die nachfolgend beschriebene Funktionalität verfügt. Der Nutzer 10 liest am Verbrauchsmessgerät 14 eine Geräteidentifikation ab, die dem Verbrauchsmessgerät 14 zugeordnet ist, und notiert diese (Figur 1). Die Geräteidentifikation kann beispielsweise eine Ziffern- und/oder Buchstabenfolge sein, die sichtbar auf dem Gerät 14 aufgedruckt oder auf Betreiben des Nutzers 10 auf einem Display 16 des elektronischen Heizkostenverteilers 14 angezeigt wird.

Außerdem erzeugt das Verbrauchsmessgerät 14 auf Betreiben des Nutzers 10 ein zeit- und geräteabhängiges spezifisches Kennwort (manuelle Triggerung), das auf dem Display 16 des Geräts 14 angezeigt wird. Hierfür verfügt das Verbrauchsmessgerät 14 sowohl über einen Zeitgeber in Form einer Echtzeituhr mit Kalenderfunktion als auch über eine Recheneinheit, in der ein dem Verbrauchsdienstleister bekannter Algorithmus hinterlegt ist. Der Algorithmus errechnet aus der Zeitvorgabe und der Geräteidentifikation einen Hashcode, der als Einmal- oder Kurzzeitkennwort dient. Zur leichteren Unterscheidung von einem später noch beschriebenen, auf Seiten des Verbrauchsdienstleisters erzeugten Codes, wird das auf Betreiben des Nutzers 10 erzeugte Kennwort nachfolgend als Nutzerkennwort bezeichnet.

Sowohl die Geräteidentifikation als auch das Nutzerkennwort sind grundsätzlich nur einer in der Abrechnungseinheit anwesenden Person zugänglich, von der angenommen wird, dass sie zur Nutzung der Abrechnungseinheit berechtigt ist und damit Anspruch auf die gewünschten Verbrauchsinformationen hat.

Der Nutzer 10 übermittelt die Geräteidentifikation und das Nutzerkennwort an ein Datenverarbeitungssystem 18 des Verbrauchsdienstleisters. Die Übermittlung kann telefonisch erfolgen; vorzugsweise werden die Daten aber über das Internet an ein Rechenzentrum des Verbrauchsdienstleisters gesendet (Figur 2). Hierfür kann vom Verbrauchsdienstleister eine spezielle Website bzw. Applikation eingerichtet sein. Im Rechenzentrum des Verbrauchsdienstleisters wird sofort mit dem gleichen Algorithmus, der zur Erzeugung des Nutzerkennworts verwendet wurde, ein von der Zeit und der übermittelten Geräteidentifikation abhängiger Code emuliert (nachgebildet), der nachfolgend als Dienstleisterkennwort bezeichnet wird. Voraussetzung für die zeitgesteuerte Erzeugung des Dienstleisterkennworts ist wiederum ein Zeitgeber in Form einer Echtzeituhr mit Kalenderfunktion.

Anschließend wird auf Seiten des Verbrauchsdienstleisters das Nutzerkennwort mit dem Dienstleisterkennwort verglichen. Bei positivem Ergebnis wird dem Nutzer 10 der Zugang zu den gewünschten Verbrauchsinformationen gewährt.

Seitens des Verbrauchsdienstleisters ist sicherzustellen, dass das Nutzerkennwort nur eine begrenzte Gültigkeitsdauer hat, beispielsweise im Minuten- oder Stundenbereich, wobei Toleranzen bezüglich der Abweichungen des nutzerseitigen und des verbrauchsdienstleisterseitigen Zeitgebers zu berücksichtigen sind. Wie die Gültigkeit des Nutzerkennworts für ein vorbestimmtes Zeitintervall in der Praxis realisiert wird, ist für die Erfindung unerheblich. In jedem Fall darf ein nach Ablauf der Gültigkeitsdauer auf Seiten des Verbrauchsdienstleisters erzeugtes Dienstleisterkennwort nicht mehr mit dem Nutzerkennwort übereinstimmen, sodass der Vergleich von Nutzerkennwort und Dienstleisterkennwort negativ ausfällt und der Zugang zu den Verbrauchsinformationen verweigert wird.

Im Rechenzentrum des Verbrauchsdienstleisters erfolgt bei positivem Vergleich auch die Zuordnung des anhand der Geräteidentifikation erkannten Verbrauchsmessgeräts 14 zur gesamten Abrechnungseinheit, zu der in der Regel weitere Verbrauchsmessgeräte 14 gehören; die Verbrauchsinformationen sollen alle Verbrauchsmessgeräte 14 der Abrechnungseinheit des Nutzers 10 einbeziehen. Entsprechende Daten und Verknüpfungen sind in einer Datenbank im Rechenzentrum des Verbrauchsdienstleisters hinterlegt. Eine eindeutige Zuordnung kann durch zusätzliche Übermittlung von Adressangaben (Postleitzahl, Ort, Straße, etc.) unterstützt werden.

Mit dieser Vorgehensweise entfallen weitestgehend die nutzerbezogene Buchführung sowie die personenbezogene Verwaltung von Zugangsberechtigungen auf Seiten des Verbrauchsdienstleisters. Die Authentifizierung des Nutzers 10 hängt von dessen zeitnaher Anwesenheit in der entsprechenden Abrechnungseinheit ab. Nach Verlassen der Abrechnungseinheit, beispielsweise nach einem Auszug, ist aufgrund der Begrenzung der Gültigkeitsdauer der Nutzerkennworte automatisch keine Authentifizierung mehr für eine Einsicht in die aktuellen Verbrauchsinformationen möglich. Selbst wenn dem ehemaligen Nutzer 10 noch eine Geräteidentifikation bekannt ist, ist es ihm außerhalb der Abrechnungseinheit nicht möglich, ein zeitlich aktuelles Nutzerkennwort am Verbrauchsmessgerät 14 zu erzeugen und zeitnah (während der Gültigkeitsdauer) an den Verbrauchsdienstleister zu übermitteln.

Die Erfindung ist nicht auf den oben beschriebenen Anwendungsfall beschränkt. Vielmehr lässt sich das Beispiel auf andere Verbrauchsmessungen und -informationen übertragen, insbesondere auf den Verbrauch von Gas, Wasser oder Elektrizität. Der elektrische Heizkostenverteiler stellt also nur ein Beispiel für ein Verbrauchsmessgerät 14 in einer Abrechnungseinheit dar. Ein Verbrauchsmessgerät 14 im Sinne der Erfindung muss auch nicht unbedingt die eigentliche Messeinheit enthalten, in jedem Fall aber den Verbrauch anzeigen.

Als Verbrauchsdienstleister im Sinne der Erfindung zählen neben den eigentlichen Anbietern von Wärme, Gas, Wasser, Strom, etc. auch angeschlossene oder unabhängige Serviceunternehmen, die ein Serviceportal zur Bereitstellung von Verbrauchsinformationen betreiben.

Nachfolgend werden noch einige Varianten bezüglich der Triggerung, der Erzeugung und der Anzeige des Nutzerkennworts beschrieben.

Wenn das Verbrauchsmessgerät 14 mit einer Schnittstelle zur sicheren, vorzugsweise drahtlosen, Übertragung von Daten über eine kurze Entfernung (Zentimeterbereich) ausgestattet ist, ermöglicht dies eine Steuerung der Nutzerkennworterzeugung mittels eines separaten Handsteuergeräts, das auf die Schnittstelle des Verbrauchsmessgeräts 14 abgestimmt ist. In diesem Fall kann die Erzeugung des Nutzerkennworts asynchron durch das Handsteuergerät ausgelöst (getriggert) werden, sobald eine Verbindung zwischen den beiden Geräten hergestellt ist. Ebenso wie die Anzeige des Nutzerkennworts kann auf diese Weise auch die Anzeige der im Verbrauchsmessgerät 14 hinterlegten Geräteidentifikation auf dessen Display 16 getriggert werden.

Eine Datenübertragung über die Verbindung ermöglicht es weiterhin, das in der Recheneinheit des Verbrauchsmessgeräts 14 erzeugte Nutzerkennwort zum Handsteuergerät zu senden und dort auf einem Display anzuzeigen. Auch die Geräteidentifikation kann so auf das Handsteuergerät übertragen und dort angezeigt werden. Dies ist unter anderem dann sinnvoll, wenn das Verbrauchsmessgerät 14 nicht über ein elektronisches Display verfügt.

Im Falle einer Datenübertragung über Standardschnittstellen (Bluetooth, Infrarot, etc.) erfolgt die Kommunikation zwischen dem Verbrauchsmessgerät 14 und dem Handsteuergerät verschlüsselt, soweit dies erforderlich ist, um ein unberechtigtes Triggern oder eine unberechtigte Datenübertragung/-anzeige zu verhindern. Grundsätzlich können auch proprietäre (nicht standardisierte) Schnittstellen und/oder proprietäre Übertragungsprotokolle Verwendung finden.

Eine Weiterbildung des Handsteuergeräte-Konzepts sieht vor, dass nach Triggerung und Übertragung der Geräteidentifikation das Nutzerkennwort ausschließlich im Handsteuergerät erzeugt wird, d. h. der zugehörige Algorithmus ist in einer Recheneinheit des Handsteuergeräts hinterlegt. Unter dieser Voraussetzung ist die Authentifizierung am Serviceportal des Verbrauchsdienstleisters nicht nur an den Zugang zum Verbrauchsmessgerät 14, sondern auch an den Besitz des Handsteuergeräts gebunden. Das Handsteuergerät wird dementsprechend nur an berechtigte Nutzer der Abrechnungseinheit ausgegeben. Dadurch kann die Sicherheit der Authentifizierung erhöht werden, da sichergestellt ist, dass eine zufällig in der Abrechnungseinheit anwesende Person ohne das Handsteuergerät kein Nutzerkennwort erzeugen kann.

Gemäß einer weiteren Fortführung des Handsteuergeräte-Konzepts kann bestimmten Personen, die nicht notwendigerweise Bewohner einer Abrechnungseinheit sind, aber über besondere Berechtigungen verfügen, ein besonderes Handsteuergerät zur Verfügung gestellt werden, dem die entsprechenden Berechtigungen zugeordnet sind. Solchen Personen, die im Sinne der Erfindung als Nutzer mit Sonderberechtigung zu verstehen sind, soll mit einer Anfrage beim Serviceportal des Verbrauchsdienstleisters der Zugang zu erweiterten Verbrauchsinformationen ermöglicht werden, insbesondere zu Verbrauchsinformationen einer Gruppe von Abrechnungseinheiten, die zusammen eine Liegenschaft bilden, oder auch zu Verbrauchsinformationen einer ganzen Gruppe von Liegenschaften. Solche Sonderberechtigungen sind sinnvoll, um Hausverwalter einzelner Liegenschaften oder autorisierte Vertreter von Wohnungsgesellschaften in die Lage zu versetzen, übergeordnete Verbrauchsinformationen zu beziehen, die das gesamte Haus bzw. den gesamten Wohnungsbestand eines Kunden betreffen, und ggf. Übersichten oder Vergleiche anzustellen. Bezüglich des Berechtigungsumfangs eines Nutzers und des damit verbundenen Umfangs der zur Verfügung stehenden Verbrauchsinformationen sind grundsätzlich beliebige Hierarchiestufen oder Profile denkbar.

Ein Nutzer mit Sonderberechtigung erhält in einer Abrechnungseinheit über das besondere Handsteuergerät die zur Anmeldung und Authentifizierung am Service-portal des Verbrauchsdienstleisters notwendigen Daten und kann die Anmeldung und Authentifizierung dann vor Ort vornehmen, z. B. über eine drahtlose Internetverbindung. Damit seitens des Verbrauchsdienstleisters erkannt wird, dass es sich um eine Anfrage handelt, die über diejenige eines normalen Nutzers der Abrechnungseinheit hinausgeht, werden mit der Anfrage besondere Informationen übermittelt. Insbesondere kann die Übertragung einer Geräteidentifikation des Handsteuergeräts vorgesehen sein, die seitens des Verbrauchsdienstleisters bekannt ist, sodass die diesem Handsteuergerät zugeordneten Berechtigungen bei der Freigabe der Verbrauchsinformationen berücksichtigt werden. Zusätzlich oder alternativ kann auch ein modifizierter Algorithmus zur Erzeugung eines Nutzerkennworts im Handsteuergerät installiert sein, der von dem eines normalen Handsteuergeräts (bzw. Verbrauchsmessgeräts 14) abweicht. Die von diesem modifizierten Algorithmus erzeugten besonderen Nutzerkennworte werden seitens des Verbrauchsdienstleisters als solche, d. h. als besonderer Nutzerkennwort-Typ erkannt. Im Rechenzentrum des Verbrauchsdienstleisters wird dementsprechend mit dem gleichen modifizierten Algorithmus ein Dienstleisterkennwort emuliert, das mit dem besonderen Nutzerkennwort verglichen wird. Je nach Typ des erkannten Nutzerkennworts wird der Umfang der zur Verfügung gestellten Verbrauchsinformationen zugeordnet.

Die besonderen Handsteuergeräte können in Gegenstände des täglichen und persönlichen Gebrauchs integriert sein, wie z. B. Armbanduhren oder Laserpointer, oder in Werbeträger, etc.

## Patentansprüche

1. Verfahren zur Authentifizierung an einem Serviceportal eines Verbrauchsdienstleisters, das einem Nutzer (10) einer Abrechnungseinheit Verbrauchsinformationen zur Verfügung stellt, mit folgenden Schritten:
- Bereitstellen einer Geräteidentifikation, die einem in der Abrechnungseinheit installierten Verbrauchsmessgerät (14) zugeordnet ist;
- Erzeugen eines von der Zeit und der Geräteidentifikation abhängigen Nutzerkennworts mittels eines dem Verbrauchsdienstleister bekannten Algorithmus auf Seiten des Nutzers (10), wobei Vorkehrungen getroffen sind, dass die Erzeugung des Nutzerkennworts auf Betreiben des Nutzers (10) nur innerhalb der Abrechnungseinheit auslösbar ist und das Nutzerkennwort in einer Recheneinheit des Verbrauchsmessgeräts (14) erzeugt und auf einem Display (16) des Verbrauchsmessgeräts (14) angezeigt wird;
- Empfangen einer Anmeldeanfrage auf Seiten des Verbrauchsdienstleisters, die die Geräteidentifikation und das Nutzerkennwort enthält;
- Erzeugen eines von der Zeit und der Geräteidentifikation abhängigen Dienstleisterkennworts mittels des bekannten Algorithmus auf Seiten des Verbrauchsdienstleisters; und
- Vergleichen des Nutzerkennworts mit dem Dienstleisterkennwort.

2. Verfahren zur Authentifizierung an einem Serviceportal eines Verbrauchsdienstleisters, das einem Nutzer (10) einer Abrechnungseinheit Verbrauchsinformationen zur Verfügung stellt, mit folgenden Schritten:
- Bereitstellen einer Geräteidentifikation, die einem in der Abrechnungseinheit installierten Verbrauchsmessgerät (14) zugeordnet ist;
- Erzeugen eines von der Zeit und der Geräteidentifikation abhängigen Nutzerkennworts mittels eines dem Verbrauchsdienstleister bekannten Algorithmus auf Seiten des Nutzers (10), wobei Vorkehrungen getroffen sind, dass die Erzeugung des Nutzerkennworts auf Betreiben des Nutzers (10) nur innerhalb der Abrechnungseinheit auslösbar ist und ein Handsteuergerät über eine proprietäre Schnittstelle mit dem Verbrauchsmessgerät (14) verbunden wird und das Nutzerkennwort in einer Recheneinheit des Handsteuergeräts erzeugt und auf einem Display des Handsteuergeräts angezeigt wird;
- Empfangen einer Anmeldeanfrage auf Seiten des Verbrauchsdienstleisters, die die Geräteidentifikation und das Nutzerkennwort enthält;
- Erzeugen eines von der Zeit und der Geräteidentifikation abhängigen Dienstleisterkennworts mittels des bekannten Algorithmus auf Seiten des Verbrauchsdienstleisters; und
- Vergleichen des Nutzerkennworts mit dem Dienstleisterkennwort.

3. Verfahren nach Anspruch 1, **dadurch gekennzeichnet, dass** seitens des Verbrauchsdienstleisters eine zeitlich begrenzte Gültigkeit des Nutzerkennworts sichergestellt wird.

4. Verfahren nach einem der Ansprüche 1 bis 3, **dadurch gekennzeichnet, dass** das Nutzerkennwort mithilfe eines Zeitgebers, insbesondere einer Echtzeituhr mit Kalenderfunktion, erzeugt wird.

5. Verfahren nach einem der vorhergehenden Ansprüche, **dadurch gekennzeichnet, dass** der Algorithmus als Ergebnis einen Hashcode liefert.

6. Verfahren nach einem der vorhergehenden Ansprüche, **dadurch gekennzeichnet, dass** mithilfe einer Datenbank des Verbrauchsdienstleisters eine Zuordnung der Geräteidentifikation zu einer mehrere Verbrauchsmessgeräte (14) umfassenden Abrechnungseinheit erfolgt, wobei die Zuordnung durch Übermittlung von Adressangaben an den Verbrauchsdienstleister unterstützt wird.

7. Verfahren nach einem der vorhergehenden Ansprüche, **dadurch gekennzeichnet, dass** der Umfang der zur Verfügung gestellten Verbrauchsinformationen von besonderen Informationen abhängt, die mit der Anmeldeanfrage empfangen werden, insbesondere von einer Geräteidentifikation eines Handsteuergeräts oder vom Typ des Nutzerkennworts.

8. Vorrichtungsanordnung zur Durchführung eines Verfahrens zur Authentifizierung an einem Service portal eines Verbrauchsdienstleisters, das einem Nutzer (10) einer Abrechnungseinheit Verbrauchsinformationen zur Verfügung stellt, mit folgenden Schritten:
- Bereitstellen einer Geräteidentifikation, die einem in der Abrechnungseinheit installierten Verbrauchsmessgerät (14) zugeordnet ist;
- Erzeugen eines von der Zeit und der Geräteidentifikation abhängigen Nutzerkennworts mittels eines dem Verbrauchsdienstleister bekannten Algorithmus auf Seiten des Nutzers (10), wobei Vorkehrungen getroffen sind, dass die Erzeugung des Nutzerkennworts nur innerhalb der Abrechnungseinheit auslösbar ist;
- Empfangen einer Anmeldeanfrage auf Seiten des Verbrauchsdienstleisters, die die Geräteidentifikation und das Nutzerkennwort enthält,
- Erzeugen eines von der Zeit und der Geräteidentifikation abhängigen Dienstleisterkennworts mittels des bekannten Algorithmus auf Seiten des Verbrauchsdienstleisters; und
- Vergleichen des Nutzerkennworts mit dem Dienstleisterkennwort;
wobei die Vorrichtungsanordnung Folgendes umfasst:
- ein Verbrauchsmessgerät (14), dem eine Geräteidentifikation zugeordnet ist;
- eine Recheneinheit, in der ein dem Verbrauchsdienstleister bekannter Algorithmus zur Erzeugung eines von der Zeit und der Geräteidentifikation abhängigen Nutzerkennworts hinterlegt ist;
- Mittel, die sicherstellen, dass die Erzeugung des Nutzerkennworts nur innerhalb der Abrechnungseinheit auslösbar ist; und
- ein dienstleisterseitiges Datenverarbeitungssystem (18), das eingerichtet ist zum
- Empfangen einer Anmeldeanfrage, die die Geräteidentifikation und das Nutzerkennwort enthält,
- Erzeugen eines von der Zeit und der Geräteidentifikation abhängigen Dienstleisterkennworts mittels des bekannten Algorithmus, und
- Vergleichen des Nutzerkennworts mit dem Dienstleisterkennwort;
- sowie ein Handsteuergerät, das über eine Schnittstelle zur vorzugsweise verschlüsselten, insbesondere drahtlosen Datenübertragung mit dem Verbrauchsmessgerät (14) verbindbar ist und die Recheneinheit zur Erzeugung des Nutzerkennworts aufweist, wobei die Datenübertragung zwischen dem Verbrauchsmessgerät (14) und dem Handsteuergerät auf eine geringe Entfernung begrenzt ist, vorzugsweise im Zentimeterbereich.

9. Vorrichtungsanordnung nach Anspruch 8, **dadurch gekennzeichnet, dass** an die Recheneinheit zur Erzeugung des Nutzerkennworts ein Zeitgeber gekoppelt ist, insbesondere in Form einer Echtzeituhr mit Kalenderfunktion.

10. Vorrichtungsanordnung nach Anspruch 8 oder 9, **dadurch gekennzeichnet, dass** die Recheneinheit zur Erzeugung des Nutzerkennworts in das Verbrauchsmessgerät (14) integriert ist.

11. Vorrichtungsanordnung nach einem der Ansprüche 8 bis 10, **dadurch gekennzeichnet, dass** das Handsteuergerät besondere Merkmale aufweist, insbesondere eine Geräteidentifikation oder einen modifizierten Algorithmus zur Erzeugung eines besonderen Nutzerkennworts, die einem seitens des Verbrauchsdienstleisters festgelegten Umfang von Verbrauchsinformationen zugeordnet sind.

## Claims

1. A method of authentication on a service portal of a consumption service provider, which makes consumption information available to a user (10) of a unit to be billed, comprising the following steps:
- providing a device identification which is assigned to a consumption meter (14) installed within the unit to be billed;
- generating, on the part of the user (10), a user password depending on the time and the device identification by means of an algorithm known to the consumption service provider, precautions being taken that the generation of the user password on the initiative of the user (10) can only be triggered within the unit to be billed and the user password is generated in a computing unit of the consumption meter (14) and is displayed on a display (16) of the consumption meter (14);
- receiving a login request on the part of the consumption service provider, the login request containing the device identification and the user password;
- generating, on the part of the consumption service provider, a service provider password depending on the time and the device identification by means of the known algorithm; and
- comparing the user password with the service provider password.

2. A method of authentication on a service portal of a consumption service provider, which makes consumption information available to a user (10) of a unit to be billed, comprising the following steps:
- providing a device identification which is assigned to a consumption meter (14) installed within the unit to be billed;
- generating, on the part of the user (10), a user password depending on the time and the device identification by means of an algorithm known to the consumption service provider, precautions being taken that the generation of the user password on the initiative of the user (10) can only be triggered within the unit to be billed and a hand-held control unit is connected to the consumption meter (14) via a proprietary interface and the user password is generated in a computing unit of the hand-held control unit and is displayed on a display of the hand-held control unit;
- receiving a login request on the part of the consumption service provider, the login request containing the device identification and the user password;
- generating, on the part of the consumption service provider, a service provider password depending on the time and the device identification by means of the known algorithm; and
- comparing the user password with the service provider password.

3. The method according to claim 1, **characterized in that** a time-limited validity of the user password is ensured on the part of the consumption service provider.

4. The method of any of claims 1 to 3, **characterized in that** the user password is generated with the aid of a timer, in particular a real-time clock with a calendar function.

5. The method according to any of the preceding claims, **characterized in that** the algorithm provides a hash code as a result.

6. The method according to any of the preceding claims, **characterized in that** an assignment of the device identification to a unit to be billed comprising a plurality of consumption meters (14) is effected with the aid of a database of the consumption service provider, the assignment being supported by a transmission of address data to the consumption service provider.

7. The method according to any of the preceding claims, **characterized in that** the volume of the consumption information made available depends on specific information that is received with the login request, in particular on a device identification of a hand-held control unit or on the type of user password.

8. A device arrangement for carrying out a method of authentication on a service portal of a consumption service provider, which makes consumption information available to a user (10) of a unit to be billed, comprising the following steps:
- providing a device identification which is assigned to a consumption meter (14) installed within the unit to be billed;
- generating, on the part of the user (10), a user password depending on the time and the device identification by means of an algorithm known to the consumption service provider, precautions being taken that the generation of the user password can only be triggered within the unit to be billed;
- receiving a login request on the part of the consumption service provider, the login request containing the device identification and the user password;
- generating, on the part of the consumption service provider, a service provider password depending on the time and the device identification by means of the known algorithm; and
- comparing the user password with the service provider password;
the device arrangement comprising:
- a consumption meter (14) to which a device identification is assigned;
- a computing unit in which an algorithm known to the consumption service provider is stored, for generating a user password depending on the time and the device identification;
- means ensuring that the generation of the user password can only be triggered within the unit to be billed; and
- a data processing system (18) on the service provider's side and which is adapted to
- receive a login request containing the device identification and the user password;
- generate a service provider password depending on the time and the device identification by means of the known algorithm; and
- compare the user password with the service provider password;
- and a hand-held control unit which is adapted to be connected to the consumption meter (14) via an interface for a preferably encrypted, in particular wireless data transfer and includes the computing unit for generating the user password, the data transfer between the consumption meter (14) and the hand-held control unit being limited to a small distance, preferably within the range of centimeters.

9. The device arrangement according to claim 8, **characterized in that** a timer, in particular in the form of a real-time clock with a calendar function, is coupled to the computing unit for generating the user password.

10. The device arrangement according to claim 8 or 9, **characterized in that** the computing unit for generating the user password is integrated in the consumption meter (14).

11. The device arrangement according to any of claims 8 to 10, **characterized in that** the hand-held control unit includes specific features, in particular a device identification or a modified algorithm for generating a specific user password, which are associated with a volume of consumption information specified on the part of the consumption service provider.

## Revendications

1. Procédé d'authentification au niveau d'un portail de services d'un prestataire de services de consommation mettant des informations de consommation à disposition d'un utilisateur (10) d'une unité de décompte, comprenant les étapes suivantes :
- fournissement d'une identification d'appareil associée à un compteur de consommation (14) installé dans l'unité de décompte ;
- génération, du côté utilisateur (10), d'un mot de passe d'utilisateur dépendant du temps et de l'identification d'appareil au moyen d'un algorithme connu du prestataire de services de consommation, des mesures de précaution étant prises de sorte que la génération du mot de passe d'utilisateur à l'initiative de l'utilisateur (10) ne puisse être déclenchée qu'à l'intérieur de l'unité de décompte et de sorte que le mot de passe d'utilisateur soit généré dans une unité de calcul du compteur de consommation (14) et affiché sur un écran (16) du compteur de consommation (14) ;
- réception d'une demande de connexion du côté prestataire de services de consommation, laquelle contient l'identification d'appareil et le mot de passe d'utilisateur ;
- génération, du côté prestataire de services de consommation, d'un mot de passe de prestataire de services dépendant du temps et de l'identification d'appareil au moyen de l'algorithme connu ; et
- comparaison du mot de passe de l'utilisateur avec le mot de passe du prestataire de services.

2. Procédé d'authentification au niveau d'un portail de services d'un prestataire de services de consommation mettant des informations de consommation à disposition d'un utilisateur (10) d'une unité de décompte, comprenant les étapes suivantes :
- fournissement d'une identification d'appareil associée à un compteur de consommation (14) installé dans l'unité de décompte ;
- génération, du côté utilisateur (10), d'un mot de passe d'utilisateur dépendant du temps et de l'identification d'appareil au moyen d'un algorithme connu du prestataire de services de consommation, des mesures de précaution étant prises de sorte que la génération du mot de passe d'utilisateur à l'initiative de l'utilisateur (10) ne puisse être déclenchée qu'à l'intérieur de l'unité de décompte, et de sorte qu'un appareil de commande à main soit relié au compteur de consommation (14) par l'intermédiaire d'une interface propriétaire, et de sorte que le mot de passe d'utilisateur soit généré dans une unité de calcul de l'appareil de commande à main et affiché sur un écran de l'appareil de commande à main ;
- réception d'une demande de connexion du côté prestataire de services de consommation, laquelle contient l'identification d'appareil et le mot de passe d'utilisateur ;
- génération, du côté prestataire de services de consommation, d'un mot de passe de prestataire de services dépendant du temps et de l'identification d'appareil au moyen de l'algorithme connu ;
- comparaison du mot de passe de l'utilisateur avec le mot de passe du prestataire de services.

3. Procédé selon la revendication 1, **caractérisé en ce qu'**une validité à temps limité du mot de passe d'utilisateur est assurée de la part du prestataire de services de consommation.

4. Procédé selon l'une des revendications 1 à 3, **caractérisé en ce que** le mot de passe d'utilisateur est généré au moyen d'une horloge, en particulier d'une horloge temps réel avec une fonction calendrier.

5. Procédé selon l'une des revendications précédentes, **caractérisé en ce que** l'algorithme fournit un code de hachage en tant que résultat.

6. Procédé selon l'une des revendications précédentes, **caractérisé en ce qu'**une attribution de l'identification d'appareil à une unité de décompte présentant plusieurs compteurs de consommation (14) est effectuée au moyen d'une base de données du prestataire de services de consommation, l'attribution étant soutenue par le transfert de spécifications d'adresse au prestataire de services de consommation.

7. Procédé selon l'une des revendications précédentes, **caractérisé en ce que** la quantité des informations de consommation mises à disposition dépend d'informations particulières reçues avec la demande de connexion, en particulier d'une identification d'appareil d'un appareil de commande à main ou du type de mot de passe d'utilisateur.

8. Agencement de dispositif pour la réalisation d'un procédé d'authentification au niveau d'un portail de services d'un prestataire de services de consommation mettant des informations de consommation à disposition d'un utilisateur (10) d'une unité de décompte, comprenant les étapes suivantes :
- fournissement d'une identification d'appareil associée à un compteur de consommation (14) installé dans l'unité de décompte ;
- génération, du côté utilisateur (10), d'un mot de passe d'utilisateur dépendant du temps et de l'identification d'appareil au moyen d'un algorithme connu du prestataire de services de consommation, des mesures de précaution étant prises de sorte que la génération du mot de passe d'utilisateur ne puisse être déclenchée qu'à l'intérieur de l'unité de décompte ;
- réception d'une demande de connexion du côté prestataire de services de consommation, laquelle contient l'identification d'appareil et le mot de passe d'utilisateur ;
- génération, du côté prestataire de services de consommation, d'un mot de passe de prestataire de services dépendant du temps et de l'identification d'appareil au moyen de l'algorithme connu ; et
- comparaison du mot de passe de l'utilisateur avec le mot de passe du prestataire de services ;
l'agencement de dispositif comprenant :
- un compteur de consommation (14) auquel une identification d'appareil est associée ;
- une unité de calcul dans laquelle un algorithme connu du prestataire de services de consommation est stocké pour la génération d'un mot de passe d'utilisateur dépendant du temps et le l'identification d'appareil ;
- des moyens assurant que la génération du mot de passe d'utilisateur ne peut être déclenchée qu'à l'intérieur de l'unité de décompte ; et
- un système de traitement de données (18) côté prestataire de services, lequel est adapté à
- la réception d'une demande de connexion qui contient l'identification d'appareil et le mot de passe d'utilisateur,
- la génération d'un mot de passe de prestataire de services dépendant du temps et de l'identification d'appareil au moyen de l'algorithme connu, et
- la comparaison du mot de passe de l'utilisateur avec le mot de passe du prestataire de services ;
- ainsi qu'un appareil de commande à main qui est apte à être relié au compteur de consommation (14) par l'intermédiaire d'une interface pour le transfert de données codées, en particulier sans fil, et qui présente l'unité de calcul pour la génération du mot de passe d'utilisateur, le transfert de données entre le compteur de consommation (14) et l'appareil de commande à main étant limité à une faible distance, de préférence dans la plage de centimètres.

9. Agencement de dispositif selon la revendication 8, **caractérisé en ce qu'**une horloge, en particulier sous forme d'horloge temps réel avec une fonction de calendrier, est couplée à l'unité de calcul pour la génération du mot de passe d'utilisateur.

10. Agencement de dispositif selon la revendication 8 ou 9, **caractérisé en ce que** l'unité de calcul est intégrée au compteur de consommation (14) pour la génération du mot de passe d'utilisateur.

11. Agencement de dispositif selon l'une des revendications 8 à 10, **caractérisé en ce que** l'appareil de commande à main présente des caractéristiques particulières, en particulier une identification d'appareil ou un algorithme modifié pour la génération d'un mot de passe d'utilisateur particulier, qui sont associés à une quantité d'informations de consommation déterminée du côté prestataire de services de consommation.
